Europäisches Patentamt

European Patent Office

Office européen des brevets

(11) Publication number: **0 514 989 A1**

# EUROPEAN PATENT APPLICATION

(21) Application number: **92201436.0**

(22) Date of filing: **20.05.92**

(51) Int. Cl.5: **G01B 11/26, G01N 21/88**

(30) Priority: **21.05.91 NL 9100877**

(43) Date of publication of application:
**25.11.92 Bulletin 92/48**

(84) Designated Contracting States:
**DE FR GB IT NL**

(71) Applicant: **SKF Industrial Trading &
Development Company B.V.
Kelvinbaan 16 P.O. Box 50
NL-3430 AB Nieuwegein(NL)**

(72) Inventor: **Van Riet, Jan Arie Pieter
Iepstraat 67
Nieuwegein(NL)**

(74) Representative: **de Vries, Johannes Hendrik
Fokke et al
Octrooibureau Los en Stigter B.V. P.O. Box
20052
NL-1000 HB Amsterdam(NL)**

(54) **Method for determining the direction of a groove cut in the surface of an object.**

(57) A method for determining the direction of a groove (2) cut in the surface of an object (1). This method is characterized in that bundled parallel light beams (4) are aimed at the groove and in that the direction of the groove is determined from the light beams (5) reflected by the groove.

fig.2

The invention relates to a method according to the preamble of claim 1.

A method for examining irregularities on a surface is known from US patent 4,055,382 according to which a surface is scanned by means of bundled light beams. Using this method, bundles of light beams are aimed with constant intensity at the surface to be examined, and the reflections are projected by means of optical devices onto an electrical converter.

A shaft rotatably supported by a bearing usually comprises a seal to prevent dust and dirt from entering the bearing. It has been demonstrated that the action of the seal can be greatly improved by cutting a groove in the shaft at the position of the seal, which groove is located in a plane slightly tilted with regard to a plane perpendicular to the direction of the shaft. In this manner, when the shaft rotates, a type of pumping motion of the seal can be obtained so as to force the dust and dirt in a direction away from the part of the shaft supported by the bearing. As a result the service life of the bearing can be lengthened considerably. For the efficiency of the intended pumping effect, the angle $\alpha$ by which the plane containing the groove is tilted with regard to the plane perpendicular to the shaft direction, is of particular importance. In practice values for the angle $\alpha$ between 7° and 9° have proved particularly effective.

In practice the method essentially used for measuring the aforementioned angle $\alpha$ consists in applying a rope in the groove of the horizontally installed shaft and in measuring parallel to the axial direction thereof the distance between the detached ends of the rope, from which - taking into account the diameter of the shaft - the desired value for the angle $\alpha$ can be derived.

However, such a method is not only cumbersome, it is also particularly inaccurate. For example, the results of the measurements are affected, among others, by the thickness and the flexibility of the rope.

The invention has the object to provide a method of the type referred to in the preamble, by means of which a similar measurement of e.g. the angle $\alpha$ and in general of the direction of a groove in the surface of an object, i.e. the position of a surface tangent extending through the groove, can be more readily performed and better reproduced and is above all more accurate.

For this purpose the invention is characterized in that bundled parallel light beams are aimed at the groove and in that the direction of the groove is determined from the light beams reflected by the groove.

This method has the advantage that it can be readily repeated in a fast and easy manner for other points of the groove, so that a high degree of measuring accuracy can be achieved.

The method according to the invention will be described hereafter by means of one embodiment given by way of example and with reference to the attached drawing.

Fig. 1(a) is a strongly magnified representation of a part of a groove cut in the surface of an object.

Fig. 1(b) is a schematic representation of the path of a bundle of light beams reflected by a groove.

Fig. 2 is a schematic drawing shown in perspective of a preferred arrangement for performing a measurement in accordance with the method of the invention.

Fig. 3 is a top view of the arrangement of fig. 2, which also shows the position of the camera.

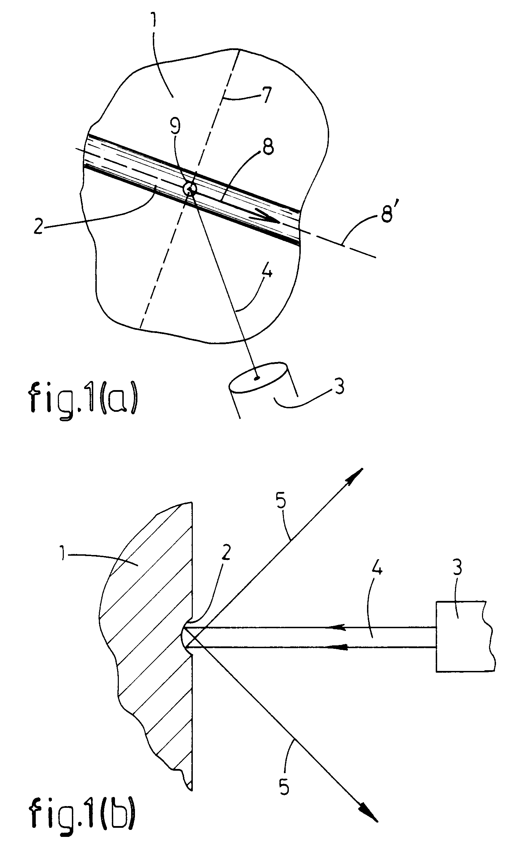

In fig. 1(a) is shown a strongly magnified part of groove 2 cut in the surface of an object 1. Preferably originating from a laser source 3 a bundle of parallel light beams 4 is aimed at the groove 2 under an arbitrary angle in relation thereto.

The path of the beams of the incident bundle 4 and the corresponding reflections 5 are illustrated in Fig. 1(b) in a cross-section of the groove 2, i.e. in a plane perpendicular to the surface of the object 1. It can be clearly seen that the cross-section of the groove 2 has generally the shape of a V and it is assumed that this shape is uniform in the longitudinal direction of the groove 2. As a result, the light beams 4 are reflected in various directions and the reflections 5 extend in a plane formed (see also fig. 1(a)) by the surface tangent 7 perpendicular to the local groove direction indicated by an arrow 8 and the straight half line formed by a mirror image of the incident bundle of light beams 4 with respect to the normal vector 9 on the surface indicated by ($\theta$) in fig. 1(a). In this context the term local groove direction 8 refers to the direction of the surface tangent 8' extending parallel to the groove at the incident bundle 4.

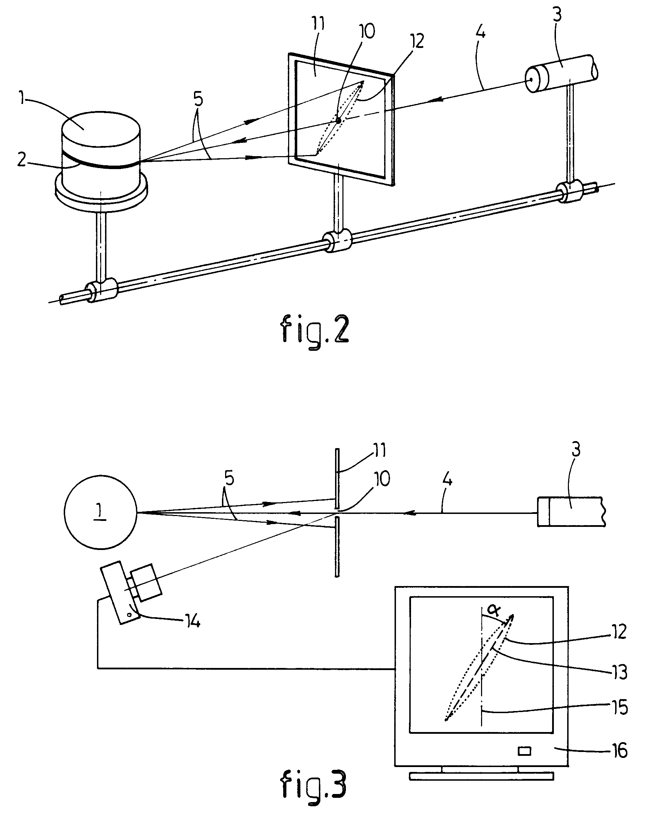

In Fig. 2 is shown in perspective a schematic drawing of a preferred arrangement for performing a measurement in accordance with the method of the invention. Through an opening 10 in a flat screen 11 the bundled parallel light beams 4 are directed substantially perpendicular to the surface of an object 1 containing the groove 2 to be examined. The screen 11 is mounted in a plane perpendicular to the bundle of light beams 4. The light beams 4 are reflected and the resulting reflections 5 are projected onto the screen 11. The image 12 of the projection on the screen 11 has essentially the shape of a straight line piece 13 (see fig. 3), the position of which being dictated by the surface tangent 7 perpendicular to the local groove direction 8 (see fig. 1(a)).

The same arrangement is shown in fig. 3, this time in top view. Additionally in the arrangement is shown the setup of a camera 14, preferably a CCD camera, by means of which the image 12 formed by the projection is observed. Mainly as a result of a curved surface along the groove of the object 1 to be examined, the image 12 will not consist of a pure straight line piece, but will show dispersion also in a traverse direction. The image 12 recorded by the camera 14 is therefore analyzed by means of a computer 16 running an image analysis program. Software suitable for the analysis of images of this type is well-known. The straight line piece 13 is reconstructed from image 12 for example by averaging the locations of image points with a light intensity above a certain level.

The relative position of the straight line piece 13 can be determined by means of its angle with respect to a predetermined reference straight line piece 15. The latter may consist of a straight line piece reconstructed in the above mentioned way by means of e.g. a circular groove along the circumference of a round shaft in a plane perpendicular to its axial direction, the measuring arrangement in other aspects being unchanged.

To calibrate the same measuring arrangement, particularly in order to correct for the position of the projection screen 11 and for the position of the camera 14 in relation thereto, it is possible, for example, to use a round shaft along the circumference of which an oval groove has been cut in a plane having a known angle $\alpha$ (see fig. 3) with regard to the plane perpendicular to the axial direction.

## Claims

1. Method for determining the direction of a groove cut in the surface of an object, **characterized** in that bundled parallel light beams (4) are aimed at the groove (2) and in that the direction (8) of the groove is determined from the light beams (5) reflected by the groove (2).

2. Method according to claim 1, **characterized** in that the reflected light beams (5) are observed by a camera (14), the image (12) of which is analyzed, the results of which analysis are used to reconstruct a line piece (13), the position of which is indicative of the direction (8) of the groove (2) at the incident bundled light beams (4).

3. Method according to claim 2, **characterized** in that the reflected light beams (5) are projected onto a screen (11) and the resulting picture (12) is observed by the camera (14).

4. Method according to claims 2 and 3, **characterized** in that the relative direction (8) of the groove (2) is determined with respect to a predetermined reference line piece (15).

5. Application of the method according to one or more of the preceding claims to an oval or spiral groove cut along the circumference of a shaft for sealing a bearing.

6. Arrangement for applying the method according to claims 1 through 4, **characterized** by means for aiming the bundled parallel light beams (4) at the groove (2) and by means for determining the groove direction (8) from the light beams (5) reflected by the groove (2).

7. Arrangement according to claim 6, **characterized** in that it comprises a screen (11) having an opening (10) through which the first means directs the bundled parallel light beams (4) substantially perpendicular to the surface of the object (1) containing the groove (2) to be examined, the screen (11) being mounted in a plane perpendicular to the bundle of light beams (4) and the reflections (5) of the light beams (4) being projected onto the screen (11).

fig.1(a)

fig.1(b)

fig.2

fig.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FEINWERKTECHNIK + MESSTECHNIK. vol. 91, no. 1, 1983, DE pages 15 - 18; G. THURN ET AL.: 'Optische Oberflächenprüfung mit Streulicht' | 1,6 | G01B11/26 G01N21/88 |
| A | * page 15, left column, line 19 - line 40; figures 1,2 * | 3 | |
| P,X | WO-A-9 112 490 (SUPERBA S.A.) * claim 1 * | 1,6 | |
| A | TECHNISCHES MESSEN TM. vol. 57, no. 5, 1990, MUNCHEN DE pages 198 - 203; E. BROERMANN: 'Berührungslose Schneidenwinkelmessung' * page 199, left column; figures 1,2 * | 1 | |
| A | APPLIED OPTICS. vol. 18, no. 2, 15 January 1979, NEW YORK US pages 197 - 200; R. M. BYTCHKOV ET AL.: 'Threaded article parameter measurement by spatial spectra analysis' | | TECHNICAL FIELDS SEARCHED (Int. Cl.5 ) G01N G01B |
| D,A | US-A-4 055 382 (ZIEKMAN) | | |

The present search report has been drawn up for all claims

| Place of search | Date of completion of the search | Examiner |
|---|---|---|
| THE HAGUE | 20 JULY 1992 | KLEIKAMP B. |

EPO FORM 1503 03.82 (P0401)